(19) **Europäisches Patentamt**

**European Patent Office**

**Office européen des brevets**

(11) **EP 1 172 332 A1**

(12) **EUROPÄISCHE PATENTANMELDUNG**

(43) Veröffentlichungstag:
**16.01.2002 Patentblatt 2002/03**

(51) Int Cl.[7]: **C01C 3/02**

(21) Anmeldenummer: **01116150.2**

(22) Anmeldetag: **04.07.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **13.07.2000 DE 10034193**

(71) Anmelder: **Röhm GmbH & Co. KG**
**64293 Darmstadt (DE)**

(72) Erfinder:
- **Schäfer, Thomas**
  **64572 Büttelborn (DE)**
- **Krauss, Thomas, Dr.**
  **67591 Mörstadt (DE)**

(54) **Verfahren zur Herstellung von Cyanwasserstoff**

(57) Es wird eine Verfahrensverbesserung beim Andrussow-Verfahren zur Herstellung von Cyanwasserstoff aus Methan, Ammoniak und Sauerstoff (in Form von reinem Sauerstoff oder mit Sauerstoff angereicherter Luft) beschrieben.

Das Verfahren zeichnet sich durch hohe Ausbeuten und sichere Fahrweise aus.

EP 1 172 332 A1

**Beschreibung**

**Gebiet der Erfindung**

Die vorliegende Erfindung betrifft eine Verbesserung des Andrussow-Verfahrens zur Herstellung von Cyanwasserstoff (HCN).

**Stand der Technik**

Die Synthese von Cyanwasserstoff (Blausäure) nach dem Andrussow-Verfahren wird in Ullmann's Encyclopedia of Industrial Chemistry, Volume 8, VCH Verlagsgesellschaft, Weinheim 1987, Seite 161-162 beschrieben. Das Eduktgasgemisch, bestehend aus Methan bzw. einem methanhaltigen Erdgasstrom, Ammoniak und Sauerstoff, wird in einem Reaktor über Katalysatornetze geleitet und bei Temperaturen von ca. 1000 °C umgesetzt. Der notwendige Sauerstoff wird üblicherweise in Form von Luft eingesetzt. Die Katalysatornetze bestehen aus Platin oder Platinlegierungen. Die Zusammensetzung des Eduktgasgemisches entspricht etwa der Stöchiometrie der exotherm verlaufenden Bruttoreaktionsgleichung

$$CH4 + NH3 + 3/2\ O2 \rightarrow HCN + 3\ H2O \quad dHr=-473{,}9\ kJ.$$

Das abströmende Reaktionsgas enthält das Produkt HCN, nicht umgesetztes $NH_3$ und $CH_4$ sowie die wesentlichen Nebenprodukte CO, $H_2$, $H_2O$, $CO_2$ und einem großen Anteil N2.
Das Reaktionsgas wird in einem Abhitzekessel schnell auf ca. 150 - 200 °C abgekühlt und passiert anschließend eine Waschkolonne, in der mit verdünnter Schwefelsäure das nicht umgesetzte $NH_3$ herausgewaschen wird und Teile des Wasserdampfes kondensiert werden. Bekannt ist auch die Absorption von $NH_3$ mit Natriumhydrogenphosphat-Lösung und anschließendes Recycling des Ammoniaks. In einer nachfolgenden Absorptionskolonne wird HCN in kaltem Wasser absorbiert und in einer nachgeschalteten Rektifikation mit einer Reinheit größer 99,5 Ma% dargestellt. Das im Sumpf der Kolonne anfallende, HCN-haltige Wasser wird abgekühlt und zur HCN-Absorptionskolonne zurückgeführt.
Ein breites Spektrum möglicher Ausführungen des Andrussow-Verfahrens ist in DE 549 055 beschrieben.
Wie beispielhaft angegeben, arbeitet man mit einem Katalysator, der aus mehreren hintereinander angeordneten feinmaschigen Netzen aus Pt mit 10% Rhodium besteht, bei Temperaturen von ca. 980 - 1050 °C. Die HCN-Ausbeute, bezogen auf eingesetztes $NH_3$, beträgt 66,1 %.
Eine Methode zur Maximierung der HCN-Ausbeute durch optimale Einstellung des Luft/Erdgas- und des Luft/Ammoniak-Verhältnisses wird in US-PS 4,128,622 beschrieben.
Neben der üblichen Betriebsweise mit Luft als Sauerstofflieferant wird in verschiedenen Schriften die Anreicherung der Luft mit Sauerstoff beschrieben. In Tab. 1 sind einige Patentschriften mit den darin genannten Betriebsbedingungen aufgelistet.
US-PS 5,882,618 beschreibt die Blausäure-Herstellung nach dem Andrussow-Verfahren unter Verwendung von mit Sauerstoff angereicherter Luft.
Um die dabei auftretenden Probleme, wie die Annäherung an die Explosionsgrenzen des Gemisches aus $NH_3$, $CH_4$ und mit Sauerstoff angereicherter Luft und die erhöhte Temperatur des Katalysatornetzes zu umgehen, die zu Ausbeuteverlusten und verkürzten Katalysatorstandzeiten führen, werden folgende Maßnahmen vorgeschlagen:
In einem ersten Verfahrensschritt wird mit Luft als Sauerstoffquelle die Anlage angefahren. Während dieses ersten Verfahrensschritts stellt sich eine bestimmte Temperatur des Katalysatorgitters ein.
In einem zweiten Verfahrensschritt wird dann Sauerstoff zudosiert und gleichzeitig der Gehalt an Ammoniak und Methan so eingestellt, dass das Gemisch oberhalb der oberen Explosionsgrenze liegt und die Temperatur am Katalysator im Bereich von 50 K der im Schritt 1 bestimmten Referenztemperatur entspricht. Die Temperatur des Katalysatornetzes beträgt ca. 1100 °C bis 1200 °C.
Durch diese Vorgehensweise erreicht man eine sichere Fahrweise der Anlage beim Betrieb mit sauerstoffangereicherter Luft.
WO 97/09273 löst die Nachteile einer großen N2-Verdünnung der Reaktionsgase durch Verwendung vorerhitzter, detonationsfähiger Gemische aus Methan, Ammoniak und mit Sauerstoff angereicherter Luft bzw. reinem Sauerstoff.
Um die detonationsfähigen Gemische sicher handhaben zu können, wird ein spezieller Reaktor verwendet, der die Detonation des Reaktionsgemisches vermeidet. Die Anwendung dieser Lösung in der industriellen Praxis erfordert einen investitionsintensiven Umbau bestehender HCN-Anlagen.

## Tabelle 1

### Zusammenstellung verschiedener Patentansprüche zur Sauerstoffanreicherung

| | DE 1 283 209, 1968<br>Società Edison<br><br>Pat 660 4519 NL<br>Pat 679 440 BE<br>*US 3,379,500 (kursiv)* | DE-AS 1 288 575, 1968<br>Società Edison<br><br>Pat 660 4697 NL<br>Pat 679 529 BE | PCT 97/09273, 1997<br>ICI<br><br>spezieller Reaktor | US 5,882,618, 1999<br>Air Liquide |
|---|---|---|---|---|
| entspricht: | | | | |
| Eduktgas-vorwärmung | -- | 200 - 400 °C<br>300 - 380 °C | 200 - 400 °C<br>weitere Temperatur- | |
| Netz-Temp | 1100 - 1200 °C | 1100 - 1200 °C | angaben für einzelne<br>Eduktgasströme | 1100 ± 50 °C |
| molares Verhältnis<br>$(O_2+N_2)/CH_4$ | 6,5 - 1,55<br>*4,55 - 2,80* | 6,0 - 1,6<br>4,5 - 2,6 | | Verhältnisse als Relation zur Fahrweise mit Luft |
| $(O_2+N_2)/NH_3$ | 6,8 - 2,0<br>*4,8 - 3,65* | 6,0 - 2,0<br>4,5 - 3,0 | | angegeben |
| $CH_4 / NH_3$ | *1,4 - 1,05*<br>*1,3 - 1,1* | 1,3 - 1,0<br>1,25 - 1,05 | 1,0 - 1,5 | |
| $O_2/(O_2 + N_2)$ | 0,245 - 0,4<br>*0,27 - 0,317* | 0,245 - 0,35<br>0,25 - 0,30 | 0,3 - 1,0 | |

**Nachteile des Standes der Technik**

Nachteile zur Betriebsweise mit Luft als Sauerstofflieferant

Wird im Eduktgasgemisch Luft als Sauerstofflieferant eingesetzt, beträgt die HCN-Konzentration im Reaktionsgas lediglich ca. 6 - 8 Vol.-%. Die niedrige HCN-Konzentration im Reaktionsgas bedingt aufgrund der Gleichgewichtseinstellung eine relativ niedrige HCN-Konzentration im wässrigen Sumpfabstrom der HCN-Absorberkolonne von 2 - 3 Masse-%. Somit wird ein hoher Energieaufwand zur Kühlung und Abtrennung des großen Mengenstroms an Absorptionswasser benötigt. Darüber hinaus bedingt der hohe Inertgasanteil relativ große Apparatevolumen und Stoffströme im Aufarbeitungsteil des Prozesses. Aufgrund der Verdünnung mit Stickstoff beträgt der Wasserstoffgehalt im Restgasstrom weniger als 18 Vol.-%. Der Wasserstoff kann somit nicht wirtschaftlich als Wertstoff isoliert werden.

Nachteile bekannter Verfahren mit Sauerstoffanreicherung im Eduktgas

Die bekannten Verfahren mit Sauerstoffanreicherung des Eduktgases (s. Tabelle 1) verbessern zwar die genannten Nachteile der Luftfahrweise, führen darüber hinaus jedoch zu anderen Einschränkungen. Beispiele sind:

1. Werden die Eduktgasverhältnisse (Vol/Vol) $O_2/NH_3$ oder $O_2/CH_4$ nicht dem Sauerstoffanreicherungsgrad angepasst, fehlt ein ausreichender Abstand der $NH_3/CH_4/N_2/O_2$-Mischung zur oberen Explosionsgrenze und ein sicherer Betrieb des Reaktors ist nicht mehr gewährleistet. Mögliche Auswirkungen sind:

⇒ Explosionsgefahr
⇒ Gefahr von Verpuffungen (Beschädigung des Katalysatornetzes)
⇒ Gefahr von lokal auftretenden Temperaturspitzen, die das Katalysatornetz beschädigen.

2. Das erhöhte Sauerstoffangebot am Katalysator führt zu einer verstärkten Oxidation von $NH_3$ zu $N_2$ und somit zur Verminderung der HCN-Ausbeute, bezogen auf das eingesetzte $NH_3$.

3. Der Sauerstoffanreicherungsgrad ist in den bekannten Verfahren auf eine Anreicherung bis ca. 40 % $O_2$ im Sauerstoff-Stickstoff-Gemisch begrenzt (DE 1 283 209, DE 1 288 575, US 5 882 618).

4. Durch Sauerstoffanreicherung im Eduktgas kann sich eine erhöhte Katalysatornetztemperatur einstellen, die zu einer schnelleren Schädigung und Desaktivierung des Katalysators führt.

5. Lösungsansätze, den bestehenden Nachteilen mit einem speziell konstruierten Reaktor zu begegnen (WO 97/09273), erfordern hohe Investitionen und sind nicht geeignet, die Leistung bestehender Anlagen kostengünstig zu steigern.

Aufgabe

Es bestand also die Aufgabe, eine Verfahrensweise bei der Durchführung des Andrussow-Prozesses zur Herstellung von Cyanwasserstoff zu entwickeln, mit der in bestehenden Anlagen durch weitgehende Sauerstoffanreicherung der Verbrennungsluft bis hin zu 100 Vol.-% Sauerstoff

- eine höhere HCN-Produktionsleistung (t HCN/h) bei gleichzeitig
- hoher HCN-Ausbeute bezogen auf eingesetztes $NH_3$ und ein
- niedriger Energiebedarf pro t HCN sowie
- eine hohe Standzeit der Katalysatornetze und ein
- sicherer Anlagenbetrieb

gewährleistet wird.

**Vorteile der erfindungsgemäßen Lösung**

Gelöst werden diese sowie weitere, nicht explizit genannte Aufgaben, die jedoch aus den vorstehend diskutierten Zusammenhängen ohne weiteres ableitbar oder erschließbar sind, durch ein Verfahren zur Herstellung von Cyanwasserstoff (Blausäure) gemäß den Merkmalen des Anspruchs 1. Die Unteransprüche beschreiben weitere vorteilhafte Ausführungsformen.

Die oben genannten Nachteile einer Betriebsweise mit Luft als Oxidationsmittel werden durch das erfindungsgemäße Verfahren vermieden. Die Produktionsleistung bestehender HCN-Reaktoren kann bei vollständigem Ersatz der Luft durch Sauerstoff (molares Verhältnis $O_2/(O_2 + N_2) = 1{,}0$) bis auf 300 % im Vergleich zur Betriebsweise mit Luft gesteigert werden.

Durch das erfindungsgemäße Verfahren gelingt es überraschender Weise, neben der Steigerung der Produktionsleistung gleichzeitig die Cyanwasserstoffausbeute, bezogen auf den teuren Rohstoff $NH_3$, zu verbessern.

Gleichzeitig wird ein Restgas mit niedrigem Stickstoffanteil und somit hohem Brennwert erzeugt.

Ebenso wird eine deutliche Verminderung des Energiebedarfes pro t produzierter HCN dadurch erreicht, dass aufgrund der größeren HCN-Konzentration im Reaktionsgas weniger Wasser zur Absorption der gebildeten HCN im Kreislauf geführt werden muss.

Ferner wird eine, mit der Betriebsweise mit Luft vergleichbare Produktionsleistung des Katalysators (HCN-Produktionsmenge pro kg Katalysator über die Gesamtlaufzeit des Katalysators) erzielt.

Die genannten Verbesserungen werden mit einem nicht zündfähigen Eduktgasgemisch erzielt und gewährleisten eine sichere Betriebsweise des Reaktors.

Der Sauerstoffanreicherungsgrad kann bis zu 100 % $O_2$ im Sauerstoff-Stickstoff-Gemisch betragen.

**Durchführung der Erfindung**

In den Punkten 1 - 6 sind die Maßnahmen beschriebenen, mit denen die erfindungsgemäße Verfahrensverbesserung erreicht wird. Nachfolgend wird als Kohlenwasserstoffquelle Methan genannt. Anstelle von Methan kann im Eduktgas auch Erdgas eingesetzt werden. Unter Erdgas wird hier ein Gas verstanden, welches mindestens 88 Vol-% Methan und Ethan und höchstens 3 Vol-% Kohlenwasserstoffe mit mehr als 3 Atomen Kohlenstoff enthält.

Punkt 1:

Der Luftvolumenstrom wird mit reinem Sauerstoff oder mit einem Stickstoff-Sauerstoff Gemisch mit ca. 40 Vol.-% Sauerstoff und mehr gemischt.

Das Verhältnis

$$\frac{O_2}{(O_2 + N_2)} = 0{,}25 - 0{,}40 \ (Vol \ / \ Vol)$$

wird eingestellt, kann aber bis zu

$$\frac{O_2}{O_2 + N_2} = 0{,}25 - 1{,}0 \ (Vol \ / \ Vol)$$

betragen.

Punkt 2:

Das molare Verhältnis

$$\frac{O_2}{NH_3}$$

im Eduktgasgemisch liegt im Bereich von

$$\frac{O_2}{NH_3} = 1{,}25 - 0{,}7 \ (Mol \ / \ Mol)$$

Das molare Verhältnis

$$\frac{O_2}{NH_3}$$

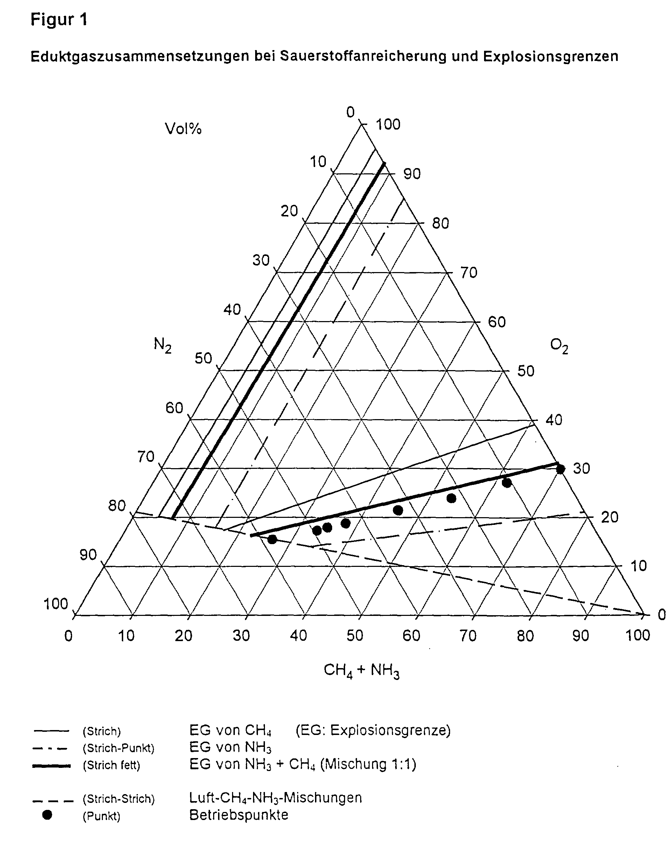

ist so zu wählen, dass die Reaktionstemperatur zwischen 950 C und 1200 °C, bevorzugt zwischen 1000 °C und 1150 °C liegt und dass die Zusammensetzung des Eduktgasgemisches außerhalb des Konzentrationsbereiches zündfähiger Gemische liegt. Beispiele möglicher Arbeitspunkte sind in Figur 1 dargestellt.

Die Temperatur des Katalysatornetzes wird mittels eines Thermoelements oder mittels eines Strahlungspyrometers gemessen. Die Meßstelle befindet sich, in Strömungsrichtung der Gase gesehen, hinter dem Katalysatornetz im Abstand von ca. 0 - 10 cm.

Punkt 3:

Einstellung des molaren Verhältnisses $CH_4/NH_3$ im Eduktgasgemisch im Bereich $CH_4/NH_3$ = 0,95 - 1,05.

Punkt 4:

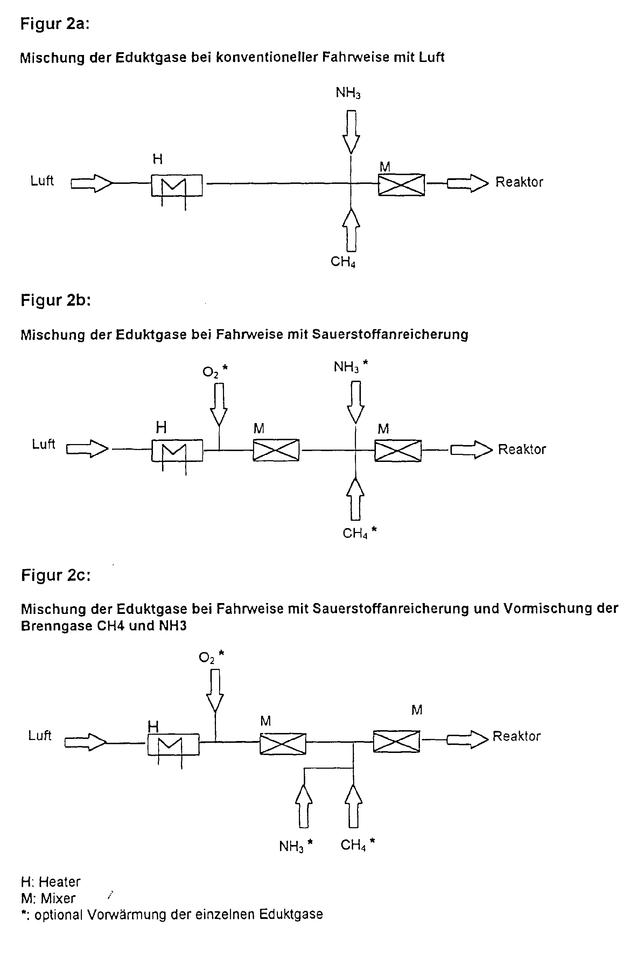

Intensives Mischen des Sauerstoffstroms mit dem Luftstrom vor der Zugabe der Brenngase $NH_3$ und $CH_4$ (s. Fig. 2 b).

Punkt 5:

Intensives Mischen des $CH_4$- und $NH_3$-Stromes mit dem Luft-Sauerstoffgemisch (siehe Fig. 2 b) oder

Punkt 5a:

Mischen von $CH_4$- und $NH_3$-Strom und anschließend intensives Einmischen des Brenngasgemisches in den Luft-Sauerstoffstrom (siehe Fig. 2 c).

Punkt 6:

Limitierung der Vorwärmung der Eduktgasmischung auf maximal 200°C. Die Einstellung der Eduktgastemperatur kann durch indirektes Erhitzen eines oder mehrerer Eduktgasvolumenströme (Luft, $O_2$, $NH_3$, $CH_4$) erfolgen. Es können auch teilgemischte Eduktgasvolumenströme gemischt werden.

Figur 1

Eduktgaszusammensetzungen dargestellt im Explosionsdiagramm.

Figur 2a

Figur 2a beschreibt die Mischung der Gase bei der bekannten Fahrweise mit Luft als Sauerstoffträger.

Figur 2b und 2c

Figur 2b und 2 c beschreiben Varianten, bei denen Sauerstoff in den Luftstrom dosiert wird, es wird ein sauerstoff-angereicherter Luftstrom hergestellt.

**Beispiele**

Nachfolgend beschriebene Beispiele wurden in einer Laborapparatur, bestehend aus einer Gasdosierung mit thermischen Massedurchflussreglern für die eingesetzten Eduktgase (Methan, Ammoniak, Luft, Sauerstoff), einer elektrischen Heizung zur Vorwärmung der Eduktgase, einem Reaktorteil (Innendurchmesser d;: 25 mm) mit 6 Lagen eines Pt/Rh10 Katalysatornetzes und einem nachgeschalteten HCN-Wäscher zur Neutralisation der gebildeten HCN mit NaOH-Lösung durchgeführt.

Das Reaktionsgas wurde online in einem GC analysiert. Zur Bilanzierung der gebildeten HCN-Menge wurde zusätzlich der CN-Gehalt im Austrag des HCN-Wäschers durch argentometrische Titration bestimmt.

Ausgehend von einer Betriebsweise entsprechend den bekannten Betriebsbedingungen mit Luft als Sauerstoffquelle wurde in einer Versuchsreihe zunehmend Luftsauerstoff durch Reinsauerstoff ersetzt und gleichzeitig bei konstantem $CH_4/NH_3$-Verhältnis das molare $O_2/NH_3$-Verhältnis reduziert. Alle Versuche wurden mit einem konstanten Eduktgasvolumenstrom von 24 Nl/Min durchgeführt. Tabelle 2 zeigt eine Auswahl repräsentativer Ergebnisse.

Tab. 2

| **Versuchsergebnisse zur $O_2$-Anreicherung im Eduktgas** ($d_i$: 25 mm, Volumenstrom $V'_F$: 24 Nl/min, Eduktgastemp. $T_F$: 60 °C, ) | | | | | | | |
|---|---|---|---|---|---|---|---|
| Nr. | $O_2$-Anteil[1])$V_{O2}$ / $(V_{O2}+V_{N2})$ | molares | Verhältnis | Netz-temp. $T_N$ | HCN-Konz. im Reaktions-gas | spez. Ausbeute | |
| | | $O_2/NH_3$ | $CH_4/NH_3$ | | | Reaktor - Leistung $L_{spez}$ | $A_{HCN}$ |
| | -- | -- | -- | °C | %Vol% | kg HCN /h/m² | % |
| 1 | 0,21 [2]) | 1,15 | 0,98 | 994 | 7,6 | 303 | 62,9 |
| 2 | 0,259 | 1,02 | 0,98 | 1011 | 9,1 | 380 | 62,4 |
| 3 | 0,300 | 0,98 | 0,98 | 1022 | 10,1 | 442 | 64,5 |
| 4 | 0,393 | 0,92 | 0,98 | 1032 | 12,0 | 542 | 65,6 |
| 5 | 0,516 | 0,88 | 0,98 | 1034 | 13,7 | 650 | 66,3 |
| 6 | 0,714 | 0,87 | 0,98 | 1010 | 14,6 | 750 | 66,8 |
| 7 | 1,00 [3]) | 0,84 | 0,99 | defekt | 16,7 | 863 | 68,0 |

[1]): $O_2$-Anteil im Sauerstoff-Luft-Gemisch [2]): nur Luftsauerstoff [3]): Fahrweise mit reinem Sauerstoff ohne Luft
$L_{spez}$ :Auf die Querschnittsfläche des Katalysatornetzes bezogene HCN-Produktionsmenge in kg / (h*m²)

Bei konstantem Gasvolumenstrom steigt die spezifische Reaktorleistung von ca. 300 kg HCN/h/m² (Oxidationsmittel nur Luftsauerstoff) auf ca. 860 kg HCN /h/m² bei einer Fahrweise mit reinem Sauerstoff als Oxidationsmittel. Die HCN-Ausbeute bezogen auf eingesetztes Ammoniak $A_{HCN,NH3}$ verbessert sich von 63% auf 68%. Die HCN-Konzentration im Reaktionsgas steigt mit Abnahme des Stickstoffanteils im Eduktgas von 7,6 Vol% auf 16,7 Vol%.

**Patentansprüche**

1. Verfahren zur Herstellung von Cyanwasserstoff nach dem Andrussow-Verfahren durch Umsetzung von Methan bzw. von methanhaltigem Erdgas, Ammoniak und von mit Sauerstoff angereicherter Luft oder mit Sauerstoff an einem Katalysator, bei erhöhter Temperatur, **dadurch gekennzeichnet, dass**

$$\frac{O_2}{O_2 + N_2} > 0,4 - 1,0 \text{ (Vol/Vol)}$$

die Reaktion in einem üblichen Andrussow-Reaktor durchgeführt wird.

2. Verfahren nach Anspruch 1, **dadurch gekennzeichnet, dass** das molare Verhältnis

$$\frac{CH_4}{NH_3}$$

im Eduktgasgemisch 0,95 - 1,05 (Mol/Mol) beträgt.

3. Verfahren nach Anspruch 1, **dadurch gekennzeichnet, dass** der Sauerstoffstrom mit dem Luftstrom vor der Zugabe der Brenngase intensiv gemischt wird.

4. Verfahren nach Anspruch 1, **dadurch gekennzeichnet, dass** der Methan- bzw. Erdgas- und Ammoniak-Strom vor der Dosierung in den Luft-Sauerstoff oder Sauerstoffstrom gemischt wird.

5. Verfahren nach Anspruch 1, **dadurch gekennzeichnet, dass** das Eduktgasgemisch auf maximal 200 °C vorgewärmt wird.

6. Verfahren nach Anspruch 1, **dadurch gekennzeichnet, dass** das Eduktgasgemisch auf maximal 150 °C vorgewärmt wird.

## Figur 1

**Eduktgaszusammensetzungen bei Sauerstoffanreicherung und Explosionsgrenzen**

| | | |
|---|---|---|
| ———— (Strich) | EG von $CH_4$ | (EG: Explosionsgrenze) |
| — · — (Strich-Punkt) | EG von $NH_3$ | |
| ▬▬▬ (Strich fett) | EG von $NH_3 + CH_4$ (Mischung 1:1) | |
| — — — (Strich-Strich) | Luft-$CH_4$-$NH_3$-Mischungen | |
| ● (Punkt) | Betriebspunkte | |

**Figur 2a:**

Mischung der Eduktgase bei konventioneller Fahrweise mit Luft

**Figur 2b:**

Mischung der Eduktgase bei Fahrweise mit Sauerstoffanreicherung

**Figur 2c:**

Mischung der Eduktgase bei Fahrweise mit Sauerstoffanreicherung und Vormischung der Brenngase CH4 und NH3

H: Heater
M: Mixer
*: optional Vorwärmung der einzelnen Eduktgase

| Europäisches Patentamt | EUROPÄISCHER RECHERCHENBERICHT | Nummer der Anmeldung EP 01 11 6150 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | US 5 882 618 A (GEZER METIN ET AL) 16. März 1999 (1999-03-16) * Spalte 3, Zeile 48 - Zeile 64; Ansprüche * | 1-6 | C01C3/02 |
| D,A | GB 1 120 401 A (MONTECATINI EDISON) 17. Juli 1968 (1968-07-17) * Seite 2, Zeile 2 - Zeile 28; Ansprüche * | 1-6 | |
| D,A | US 3 379 500 A (FRANCESCO ALBANESE ET AL) 23. April 1968 (1968-04-23) * Spalte 2, Zeile 33 - Zeile 53; Ansprüche * | 1-6 | |
| D,A | WO 97 09273 A (DOY RALPH ;ICI PLC (GB); COWELL CHRISTOPHER (GB)) 13. März 1997 (1997-03-13) | | |

**RECHERCHIERTE SACHGEBIETE (Int.Cl.7)**

C01C

Der vorliegende Recherchenbericht wurde für alle Patentansprüche erstellt

| Recherchenort | Abschlußdatum der Recherche | Prüfer |
|---|---|---|
| DEN HAAG | 15. Oktober 2001 | Zalm, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

EP 1 172 332 A1

## ANHANG ZUM EUROPÄISCHEN RECHERCHENBERICHT
## ÜBER DIE EUROPÄISCHE PATENTANMELDUNG NR.

EP 01 11 6150

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-10-2001

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US 5882618 | A | | 16-03-1999 | KEINE | | | |
| GB 1120401 | A | | 17-07-1968 | BE | 679529 | A | 16-09-1966 |
| | | | | CH | 480271 | A | 31-10-1969 |
| | | | | DE | 1288575 | B | |
| | | | | FR | 1475490 | A | 14-06-1967 |
| | | | | IL | 25566 | A | 29-01-1970 |
| | | | | LU | 50883 | A | 13-06-1966 |
| | | | | NL | 6604697 | A | 17-10-1966 |
| | | | | SE | 326697 | B | 03-08-1970 |
| US 3379500 | A | | 23-04-1968 | BE | 679440 | A | 16-09-1966 |
| | | | | CH | 480270 | A | 31-10-1969 |
| | | | | DE | 1283209 | B | |
| | | | | DK | 116356 | B | 05-01-1970 |
| | | | | FR | 1475406 | A | 14-06-1967 |
| | | | | GB | 1120237 | A | 17-07-1968 |
| | | | | IL | 25539 | A | 29-01-1970 |
| | | | | LU | 50884 | A | 13-06-1966 |
| | | | | NL | 6604519 | A | 17-10-1966 |
| | | | | NO | 116242 | B | 24-02-1969 |
| | | | | SE | 326696 | B | 03-08-1970 |
| WO 9709273 | A | | 13-03-1997 | AT | 202541 | T | 15-07-2001 |
| | | | | AU | 702825 | B2 | 04-03-1999 |
| | | | | AU | 6879996 | A | 27-03-1997 |
| | | | | BR | 9610149 | A | 02-02-1999 |
| | | | | CN | 1200102 | A | 25-11-1998 |
| | | | | DE | 69613581 | D1 | 02-08-2001 |
| | | | | EP | 0847372 | A1 | 17-06-1998 |
| | | | | ES | 2158339 | T3 | 01-09-2001 |
| | | | | WO | 9709273 | A1 | 13-03-1997 |
| | | | | JP | 11512070 | T | 19-10-1999 |
| | | | | TW | 389741 | B | 11-05-2000 |

EPO FORM P0461

Für nähere Einzelheiten zu diesem Anhang : siehe Amtsblatt des Europäischen Patentamts, Nr.12/82